# EUROPÄISCHE PATENTSCHRIFT

(11) **EP 0 855 046 B1**
(45) Veröffentlichungstag und Bekanntmachung des Hinweises auf die Patenterteilung: **21.07.1999**
(21) Anmeldenummer: 96943871.2
(22) Anmeldetag: 11.10.1996
(51) Int. Cl.: G02B 6/38

(54) **OPTISCHER STECKVERBINDER**
PLUG-TYPE OPTICAL CONNECTOR
CONNECTEUR OPTIQUE ENFICHABLE

(30) Priorität: 12.10.1995 DE 19539549
(43) Veröffentlichungstag der Anmeldung: 29.07.1998
(73) Patentinhaber: SIEMENS AKTIENGESELLSCHAFT, 80333 München (DE)
(72) Erfinder: MELCHIOR, Lutz, D-10245 Berlin (DE); KROPP, Jörg-Reinhardt, D-12355 Berlin (DE)
(86) Internationale Anmeldenummer: DE9601972
(87) Internationale Veröffentlichungsnummer: WO9714068

(56) Entgegenhaltungen:
- EP-A- 0 156 397
- EP-A- 0 430 107
- EP-A- 0 546 936
- US-A- 4 986 762

## Beschreibung

Die Erfindung liegt auf dem Gebiet optischer Steckverbinder, insbesondere für modulartig aufgebaute elektronische Geräte. Diese Geräte haben üblicherweise mehrere im wesentlichen parallel ausgerichtete und von einer gemeinsamen Trägerleiterplatte oder einer sog. Rückwandplatine getragene Leiterplatteneinschübe. Die Leiterplatteneinschübe sind mit Mehrfach-Steckverbindern zur Wanddurchführung und zum Anschluß oder zur Verbindung mit anderen Leiterplatteneinschüben versehen. An der Rückseite der Rückwandplatine sind korrespondierende Kopplungspartner angeordnet, die ähnlich aufgebaute Steckverbinder sein können und in ein in der Rückwand angeordnetes Zwischenteil zur Ausrichtung der Kopplungspartner einsteckbar sind.

Die Erfindung betrifft einen dazu geeigneten optischen Steckverbinder, der unter Ausrichtung mindestens eines Lichtwellenleitersteckers in einen Kopplungskörper einführbar ist, mit einem Halter, in dem der Lichtwellenleiterstecker entgegen der Kraft eines Federelements axialverschieblich gelagert ist.

Optische Ankopplungen stellen hinsichtlich der Reproduzierbarkeit und Präzision ihres Kopplungswirkungsgrades höchste Anforderungen. Anders als bei rein elektrischen Steckverbindungen wird bei optischen Steckverbindungen eine definierte Einsteck- oder Einschubtiefe der Steckverbinder und/oder ein unmittelbarer Körperkontakt der Koppelstirnflächen der Lichtwellenleiterstecker mit dem jeweiligen Kopplungspartner gefordert. In diesem Zusammenhang sind vielfältige Konstruktionen bekannt geworden, bei denen eine Federkraft einen definierten Kontaktdruck zwischen den Stirnflachen der Kopplungspartner bewirkt.

Die WO 94/24594 beschreibt eine einkanalige optische Wanddurchführung, bei der zwei in jeweils einem Steckverbinder axial verschieblich entgegen einer Federkraft gelagerte Lichtwellenleiterstecker in eine Zentrierhülse eines die Wand durchdringenden Kopplungskörpers einführbar sind. Verriegelungselemente des Kopplungskörpers greifen bei eingestecktem Steckverbinder unmittelbar an dem Halter an und sind durch eine den Halter umgebende, axialverschiebliche Entriegelungshülse (Push-Pull-Prinzip) bedarfsweise entriegelbar.

Die EP-0 330 231 A2 beschreibt eine Wanddurchführung mit zwei Steckverbindern in Form jeweils einer Hybrid- oder Mischsteckleiste, die neben Zentrierelementen sowohl optische als auch elektrische Steckerstifte aufweist.

Ein Steckverbinder der eingangs genannten Art ist aus der EP-0 485 196 B1 bekannt, die einen eine Wand durchdringenden Kopplungskörper beschreibt, in den beiderseits ein Steckverbinder einführbar ist. Jeder Steckverbinder umfaßt einen Lichtwellenleiterstecker (sog. Mehrfachfaser-Ferrule), der mehrere in einer Ebene angeordnete Lichtwellenleiterenden aufnimmt. Die Lichtwellenleiterstecker sind mittels korrespondierender Zentrierkanäle des Kopplungskörpers gegenseitig ausrichtbar, wobei die entgegen der Kraft eines Federelements axial zurückverschieblichen Lichtwellenleiterstecker mit ihren Kopplungsstirnflachen in Körperkontakt gelangen.

Ein weiteres Beispiel für Steckverbinder ist aus EP 0 430 107 bekannt.

Den vorgenannten bekannten Steckverbindern ist die Problematik gemeinsam, daß die maximale Einstecktiefe ihrer Lichtwellenleiterstecker durch den vorgegebenen verfügbaren Einfederweg des Lichtwellenleitersteckers und die Anschlag- oder Verriegelungsposition des Steckverbinders festgelegt ist. Die Konfiguration der Steckverbinder muß im Voraus präzise auf die jeweilige Einstecktiefe bzw. Wanddicke abgestimmt sein, weil andernfalls möglicherweise der gewünschte Körperkontakt der Koppelstirnflächen nicht (mehr) zustandekommmt.

Die der Erfindung zugrundeliegende Aufgabe besteht daher in der Schaffung eines optisches Steckverbinders, mit dem bei hinsichtlich des verfügbaren Weges der Axialverschiebung und der Länge des Steckerstifts unverändertem Aufbau unterschiedliche Einstecktiefen realisierbar sind, so daß z.B. ein Einsatz bei unterschiedlichen Wanddicken möglich ist.

Diese Aufgabe wird erfindungsgemäß bei einem Steckverbinder der eingangs genannten Art dadurch gelöst, daß der Halter in ein Trägerelement eingesetzt ist, das mit Mitteln zur relativen Lagefixierung in bezug auf den Kopplungskörper versehen ist und daß der Halter und das Trägerelement formschlüssige Konturen aufweisen, die derart ausgebildet sind, daß die Position des Halters gegenüber dem Trägerelement in mindestens zwei verschiedenen diskreten Positionen in axialer Richtung einstellbar und fixierbar ist.

Der Halter und das Trägerelement sind durch von korrespondierenden Außen- bzw. Innenkonturen gebildete zusammenwirkende Formschlußelemente in bedarfsweise wählbaren verschiedenen relativen axialen Positionen zueinander fixierbar. Damit kann in vorteilhafter Weise der Überstand des Halters in bezug auf das in seiner Lage gegenüber dem Kopplungskörper bzw. der Wand durch die Lagefixierungsmittel in vorgegebener Weise positionierte Trägerelement eingestellt werden. Gleichzeitig wird damit die Eindringtiefe der Lichtwellenleiterstecker in den Kopplungskörper bestimmt. Bevorzugt weist das Trägerelement als Lagefixierungsmittel Verriegelungshebel auf, die mit korrespondierenden wandseitigen oder kopplungskörperseitigen Verriegelungselementen zusammenwirken. Der erfindungsgemäße Steckverbinder kann besonders vorteilhaft zur Wanddurchführung bei unterschiedlichsten Wanddicken bzw.

Rückwandplatinendicken eingesetzt und an diese auch vor Ort und bei Umbauten ohne weiteres angepaßt werden.

Eine hinsichtlich der Montage und der Anpassung vorteilhafte Gestaltung der Erfindung sieht vor, daß das Trägerelement eine Öffnung in einer Wand hat, durch die der Halter einsetzbar ist.

Eine hinsichtlich der Flexibilität und fertigungstechnisch bevorzugte Ausgestaltung der Erfindung sieht vor, daß die zusammenwirkenden formschlüssigen Konturen von einer außenseitigen Zahnung des Halters und einer korrespondierenden innenseitigen Zahnung gleicher Teilung des Trägerelements gebildet sind. Damit läßt sich der Halter gegenüber dem Trägerelement in einer Vielzahl diskreter relativer Axialpositionen fixieren, so daß eine Anpassung der Einstecktiefe z. B. für eine Wanddurchführung in der Teilung entsprechenden Schritten in feiner Abstufung möglich ist.

Eine hinsichtlich der Kopplung vieler optischer Kanäle bevorzugte Fortbildung der Erfindung sieht vor, daß der Halter mehrere Kammern zur jeweiligen schwimmenden federkraftbeaufschlagten Lagerung eines individuellen Lichtwellenleitersteckers aufweist. Bevorzugt schließt jeder Lichtwellenleiterstecker mehrere Lichtwellenleiter ab. Als Lichtwellenleiterstecker kommen dabei bevorzugt an sich bekannte sog. "Mehrfachfaser-Ferrulen" in Betracht, die mehrere Lichtwellenleiterenden in einem gemeinsamen Kunststoffstecker führen. Derartige Lichtwellenleiterstecker sind für sich beispielsweise aus der eingangs genannten EP-0 485 196 B1 oder aus der JP-07-77638 A bekannt.

Um die empfindlichen Kopplungsstirnflächen der Lichtwellenleiterstecker gegen Beschädigungen im ungesteckten Zustand zu schützen, sieht eine weitere vorteilhafte Ausbildung der Erfindung vor, daß der Halter frontseitig einen Kragen aufweist, der bis über die Stirnfläche(n) des oder der Lichtwellenleiterstecker (5) hinausragt.

Eine fertigungstechnisch und hinsichtlich des Lichtwellenleiterschutzes vorteilhafte Fortbildung der Erfindung besteht darin, daß der Halter rückwartige Aufnahmekammern für Enden von Zugentlastungselementen und/oder Knickschutzelementen aufweist.

Ein Ausführungsbeispiel der Erfindung wird nachfolgend anhand einer Zeichnung näher erläutert, es zeigen:
Figuren 1 und 2 jeweils Schnittdarstellungen eines erfindungsgemäßen Steckverbinders und
Figur 3 eine perspektivische Ansicht des Steckverbinders.

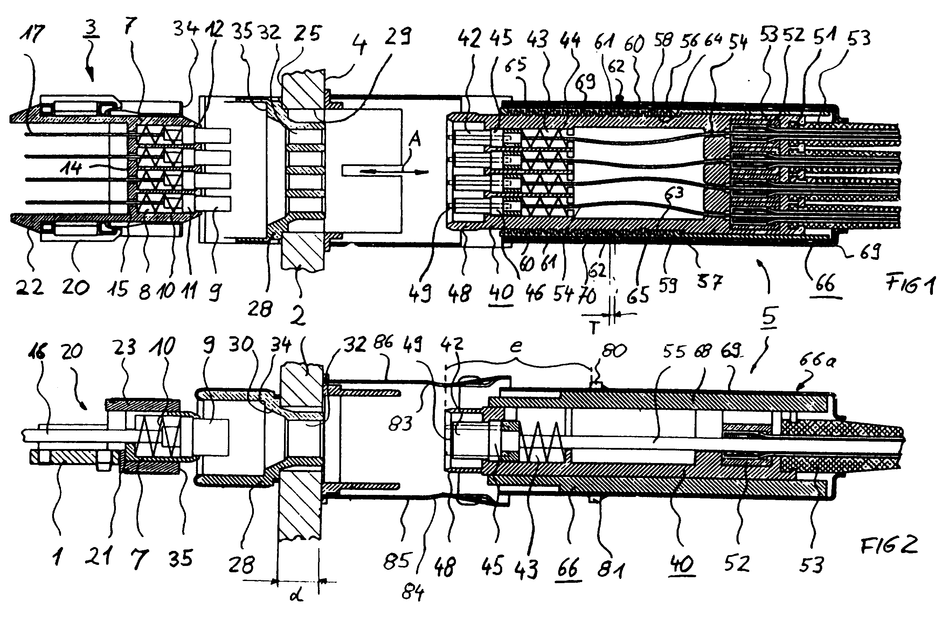

Die Figuren 1 und 2 zeigen einen Ausschnitt eines elektronischen Gerätes mit einer Wanddurchführung optischer Kanäle. In einem Gestellschrank ist eine Leiterplattenbaugruppe 1 zusammen mit weiteren (nicht gezeigten) Leiterplattenbaugruppen parallel und rechtwinklig zu einer sog. Rückwandleiterplatine 2 angeordnet. Auf der Leiterplattenbaugruppe 1 ist ein erster Steckverbinder 3 vorgesehen, um die Baugruppe 2 sowohl mechanisch mit der Rückwand 2 zu verbinden, als auch elektrische und optische Signale von der Baugruppe zur bzw. durch die Rückwandleiterplatine 2 führen zu können. Ein von der Rückseite 4 der Wand 2 her einsteckbarer zweiter Steckverbinder 5 übergibt die Signale an andere Baugruppen des Gestellschrankes oder leitet sie an andere Gestellschranke weiter.

Bei der explizit dargestellten Wanddurchführung umfaßt der Steckverbinder 3 einen Halter 7 mit vier Kammern 8. In diesen sind vier Lichtwellenleiterstecker 9 schwimmend parallel nebeneinander gelagert. Die als sog. Mehrfachfaser-Ferrulen (EP 0 485 196 B1) aus Kunststoff gebildeten Lichtwellenleiterstecker 9 sind entgegen der Kraft individueller Schraubenfedern 10 in den Kammern 8 axial (in Richtung A) verschieblich, wobei ihre axiale Bewegungsfreiheit jeweils durch den Anschlag einer Schulter 11 an stirnseitigen Verengungen 12 und rückwärtig durch eine Halterwand 14 mit Durchtrittsöffnungen 15 für die in Lichtwellenleiterbändern 16 zusammengefaßten Lichtwellenleiterenden 17 begrenzt ist. Auf der Leiterplattenbaugruppe 1 befindet sich eine Leiste 20 zur Aufnahme des Halters 7. Der Halter wird von der kopplungsseitig offenen Frontseite in die Leiste 20 eingeschoben, über Führungselemente zentriert und gegen einen Anschlag 21 gedrückt. Rasthaken 22 rasten hinter der Leiste 20 ein. Beim Einsetzen des Halters 7 in die Leiste 20 werden die Kammern 8 von einer Abdeckung 23 der Leiste 20 soweit verschlossen, daß sich die Lichtwellenleiterstecker 9 und die Federn 10 bei der Handhabung bzw. bei Steckbewegungen nicht aus den Kammern 8 herausbewegen können. Die Leiste 20 kann neben dem Halter 7 außerdem elektrische Kontaktelemente aufnehmen, so daß vorteilhafterweise auch sog. Mischleisten konfigurierbar sind.

Der Steckverbinder 3 ist mit seinen Lichtwellenleitersteckern 9 von der Wandinnenseite 25 in einen Kopplungskörper 28 einführbar, der eine Öffnung 29 in der Wand 2 durchdringt. Die wandinnenseitige Kontur 30 des Kopplungskörpers 28 ist so gestaltet, daß sich beim Einstecken des Steckverbinders 3 die Konturen der beteiligten Teile etappenweise zentrieren. Letztlich zentrieren sich die Lichtwellenleiterstecker 9 gleichzeitig in an ihre Geometrie angepaßten Zentrierkanalen 32 mit rechteckigem Querschnitt. Bei vollständig eingestecktem Steckverbinder 3 schlägt die Stirnfläche 34 der Leiste 20 gegen eine Anschlagfläche 35 des Kopplungskörpers 28 und bemißt insoweit die Einstecktiefe der Stecker 9. Der Kopplungskörper 28 kann zusätzlich elektrische Kontakte aufnehmen bzw. herstellen.

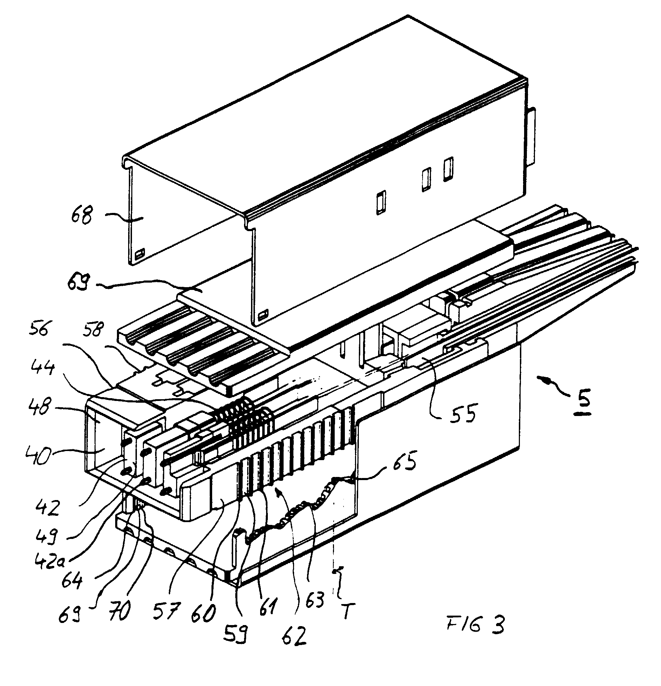

Der rückwärtig von der Wandaußenseite 4 in den Kopplungskörper einführbare Steckverbinder 5 umfaßt einen Halter 40, in dem in zum Halter 7 entsprechender Weise vier Lichtwellenleiterstecker 42 mit Zentrierstiften 42a (Figur 3) in Kammern 43 axial verschieblich entgegen der Kraft individueller Schraubenfedern 44 schwimmend parallel nebeneinander gelagert sind. Die Lichtwellenleiterstecker 42 sind ebenfalls sog. Mehrfachfaser-Ferrulen und sind in ihrer vorwärtigen Axialverschieblichkeit durch das Zusammenwirken von Schultern 45 mit Verengungen 46 ihrer Austrittsöffnungen in dem Halter 40 begrenzt. Der Halter 40 ist frontseitig unter Bildung eines Kragens 48 soweit verlängert, daß die empfindlichen koppelseitigen Stirnflächen 49 der Stecker- bzw. Lichtwellenleiter im dargestellten, ungesteckten Zustand geschützt sind. Der hintere Bereich des Halters 40 hat Aufnahmekammern 50 bzw 51 für individuelle Zugentlastungselemente 52 bzw. Knickschutztüllen 53, die jeweils einem mehrere Lichtwellenleiter 54 umfassenden Lichtwellenleiterband 55 zugeordnet sind.

Wie die Figur 1 und die separate, perspektivische Darstellung des Steckverbinders 5 in Figur 3 zeigen, hat der Halter 40 an seinen beiden Seitenwänden 56, 57 einen zahnartig ausgebildeten Außenkonturbereich 58, 59, der im wesentlichen aus mit einer Teilung T alternierenden parallelen Stegen 60 bzw. Nuten 61 besteht. Mit dieser so gebildeten außenseitigen Zahnung 62 des Halters 40 sind korrespondierende Innenkonturen 63, 64 mit einer Zahnung 65 eines Trägerelementes 66 in Eingriff. Der Halter 40 ist in das Trägerelement 66 von oben durch eine Ausnehmung in der Deckwand 66a eingesetzt. Das Trägerelement hat einen annähernd U-förmigen Querschnitt. Die korrespondierenden innenseitigen Zahnungen 65 sind entsprechend von alterniernden Stegen 69 und Nuten 70 gleicher Teilung T gebildet. Durch das Zusammenwirken der Zahnungen 62, 65 von Halter 40 und Trägerelement 66 sind diskrete, fixe Axialpositionen des Halters 40 relativ zu dem Trägerelement 60 wählbar. Zur Einstellung eines gewünschten, auf die Dicke d der Wand 2 und auf die hinsichtlich der Einstecktiefe der Stecker 9 noch erforderliche Einstecktiefe der Lichtwellenleiterstecker 9 abgestimmten Überstandes des frontseitigen Bereichs des Halters 40 gegenüber dem Trägerelement 66 und damit der Lichtellenleiterstecker 42 kann der Halter 40 gemäß der Darstellung in Figur 2 vertikal nach oben aus dem Trägerelement 66 entnommen, um eine gewünschte Anzahl Teilungen T der Zahnungen in axialer Richtung A versetzt und zur axialen Fixierung in Richtung der Stege 60 wieder in das Trägerelement 66 abgesenkt werden. In den Figuren 2 und 3 ist ferner eine Abdeckung 68 erkennbar, die den Innenraum des Halters 40 nach der Montage verschließt und die ihrerseits von einer U-förmigen elektrischen Abschirmung 69 umgeben ist.

Das Trägerelement 66 (Figur 2) weist seitliche Verriegelungsfortsatze 80, 81 auf, die mit Öffnungen 83, 84 in nach außen auffederbaren Verriegelungshebeln 85, 86 zusammenwirken. Bei eingeführtem Steckverbinder 5 rasten die Verriegelungsfortsätze 80, 81 in den Öffnungen 83, 84 ein und verhindern damit ein ungewolltes Herausziehen des Steckverbinders 5 aus dem Kopplungskörper 28. Diese Verriegelungsmittel bewirken eine relative Lagefixierung des Trägerelements 66 in bezug auf den Kopplungskörper 28 und die Wand 2, so daß durch die vorstehend beschriebene Einstellungsmöglichkeit die Einstecktiefe e des Halters 40 bzw. der Lichtwellenleiterstecker 42 in bezug auf den Verriegelungspunkt zwischen den Verriegelungsmitteln 80, 81 bzw. 83, 84 individuell auf die Dicke d der Wand 2 einstellbar ist. Die beschriebene Wanddurchführung ist daher in einfachster Weise bei gleichbleibender konstruktiver Auslegung der wesentlichen Komponenten und bei unverändertem maximalen Federweg bzw. unveränderten Federkräften auf gewünschte unterschiedliche Einstecktiefen äußerst einfach anpaßbar, wobei eine Anpassung des kooperierenden Steckverbinders 3 nicht erforderlich ist.

## Patentansprüche

1. Optischer Steckverbinder, der unter Ausrichtung mindestens eines Lichtwellenleitersteckers (42) in einen Kopplungskörper (28) einführbar ist,
mit einem Halter (40), in dem der Lichtwellenleiterstecker (42) entgegen der Kraft eines Federelements (44) axialverschieblich gelagert ist,
**dadurch gekennzeichnet, daß**
der Halter (40) in ein Trägerelement (66) eingesetzt ist, das mit Mitteln (80,81) zur relativen Lagefixierung in bezug auf den Kopplungskörper (28) versehen ist, und daß
der Halter (40) und das Trägerelement (66) formschlüssige Konturen (58, 59; 63, 64) aufweisen, die derart ausgebildet sind, daß die Position des Halters (40) gegenüber dem Trägerelement (66) in mindestens zwei verschiedenen diskreten Positionen in axialer Richtung (A) einstellbar und fixierbar ist.

2. Steckverbinder nach Anspruch 1,
**dadurch gekennzeichnet, daß**
das Trägerelement (60) eine Öffnung (66a) in einer Wand hat, durch die der Halter (40) einsetzbar ist.

3. Steckverbinder nach einem der vorangehenden Ansprüche,
**dadurch gekennzeichnet, daß**
die zusammenwirkenden formschlüssigen Konturen (58,59;63,64) von einer außenseitigen Zahnung (62) des Halters (40) und einer korrespondierenden innenseitigen Zahnung (65) gleicher Teilung (T) des Trägerelements (66) gebildet sind.

4. Steckverbinder nach einem der vorangehenden Ansprüche,
**dadurch gekennzeichnet, daß**
der Halter (40) mehrere Kammern (43) zur jeweiligen schwimmenden federkraftbeaufschlagten Lagerung eines individuellen Lichtwellenleitersteckers (42) aufweist.

5. Steckverbinder nach einem der vorangehenden Ansprüche,
**dadurch gekennzeichnet, daß**
jeder Lichtwellenleiterstecker (42) mehrere Lichtwellenleiter (54) abschließt.

6. Steckverbinder nach einem der vorangehenden Ansprüche,
**dadurch gekennzeichnet, daß**
der Halter (40) frontseitig einen Kragen (48) aufweist, der bis über die Stirnfläche(n) (49) des oder der Lichtwellenleiterstecker(s) (42) hinausragt.

7. Steckverbinder nach einem der vorangehenden Ansprüche,
**dadurch gekennzeichnet, daß**
der Halter (40) rückwärtig Aufnahmekammern (50,51) für Enden von Zugentlastungselementen (52) und/oder Knickschutzelementen (53) aufweist.

## Claims

1. Plug-in optical connector, which can be introduced into a coupling body (28) with alignment of at least one optical waveguide plug (42), having a holder (40) in which the optical waveguide plug (42) is mounted such that it can be displaced axially in opposition to the force of a spring element (44), characterised in that the holder (40) is inserted into a carrier element (66) which is provided with means (80, 81) for fixing the relative position in relation to the coupling body (28) and in that the holder (40) and the carrier element (66) have form-locking contours (58, 59; 63, 64) which are designed in such a way that the position of the holder (40) in relation to the carrier element (66) can be adjusted in an axial direction (A) and fixed in at least two different discrete positions.

2. Plug-in connector according to claim 1, characterised in that the carrier element (60) has an opening (66a) in a wall through which the holder (40) can be inserted.

3. Plug-in connector according to one of the preceding claims, characterised in that the cooperating form-locking contours (58, 59; 63, 64) are formed by an external toothing (62) of the holder (40) and a corresponding internal toothing (65) with the same pitch (T) of the carrier element (66).

4. Plug-in connector according to one of the preceding claims, characterised in that the holder (40) has a plurality of chambers (43) for the respective floating, spring force-loaded mounting of an individual optical waveguide plug (42).

5. Plug-in connector according to one of the preceding claims, characterised in that each optical waveguide plug (42) closes off a plurality of optical waveguides (54).

6. Plug-in connector according to one of the preceding claims, characterised in that the holder (40) has a collar (48) on the front side that projects out beyond the end face(s) (49) of the optical waveguide plug(s) (42).

7. Plug-in connector according to one of the preceding claims, characterised in that rearwards the holder (40) has receiving chambers (50, 51) for ends of strain-relief elements (52) and/or anti-kink elements (53).

## Revendications

1. Connecteur optique enfichable, qui peut être introduit dans un corps (28) de couplage en alignant au moins une fiche (42) de conducteur optique,
comprenant un support (40), dans lequel la fiche (42) de conducteur optique est montée à coulissement axial à l'encontre de la force d'un élément (44) de ressort,
**caractérisé** en ce que le support (40) est monté dans un élément (66) porteur qui est pourvu de moyens (80, 81) pour l'immobilisation relative par rapport au corps (28) de couplage, et en ce que
le support (40) et l'élément (66) porteur possèdent des contours (58, 59 ; 63, 64) coopérant par complémentarité de forme, qui sont conçus de telle sorte que le support (40) peut être réglé et immobilisé dans au moins deux positions discrètes différentes par rapport à l'élément (66) porteur en direction (A) axiale.

2. Connecteur enfichable suivant la revendication 1, **caractérisé** en ce que l'élément (66) porteur possède dans une paroi, une ouverture (66a) par laquelle peut être inséré le support (40).

3. Connecteur enfichable suivant l'une des revendications précédentes, **caractérisé** en ce que les contours (58, 59; 63, 64) coopérant par complémentarité de forme sont formés par une denture (62) extérieure du support (40) et une denture (65) intérieure correspondante, de même pas (T), de l'élément (66) porteur.

4. Connecteur enfichable suivant l'une des revendications précédentes, **caractérisé** en ce que le support (40) comporte plusieurs compartiments (43) pour le montage flottant respectif, sous charge de ressort, d'une fiche (42) individuelle de conducteur optique.

5. Connecteur enfichable suivant l'une des revendications précédentes, **caractérisé** en ce que chaque fiche (42) de conducteur optique termine plusieurs conducteurs (54) optiques.

6. Connecteur enfichable suivant l'une des revendications précédentes, **caractérisé** en ce que le support (40) possède sur le côté frontal un collet (48) qui dépasse au-delà de la ou des faces (49) frontales de la ou des fiches (42) de conducteur optique.

7. Connecteur enfichable suivant l'une des revendications précédentes, **caractérisé** en ce que le support (40) comporte à l'arrière des compartiments (50, 51) récepteurs pour des extrémités d'éléments (52) de soulagement en traction et/ou d'éléments (53) de protection contre le pliage.
